**Europäisches Patentamt**

**European Patent Office**

**Office européen des brevets**

(19)

(11) Veröffentlichungsnummer: **0 220 418**
**B1**

# (12) EUROPÄISCHE PATENTSCHRIFT

(45) Veröffentlichungstag der Patentschrift:
25.10.89

(21) Anmeldenummer: **86111778.6**

(22) Anmeldetag: **26.08.86**

(51) Int. Cl.⁴: **B22F 9/08**

(54) Verfahren und Vorrichtung zum Herstellen von Feinstpulver in Kugelform.

(30) Priorität: **24.09.85 DE 3533964**

(43) Veröffentlichungstag der Anmeldung:
**06.05.87 Patentblatt 87/19**

(45) Bekanntmachung des Hinweises auf die Patenterteilung:
**25.10.89 Patentblatt 89/43**

(84) Benannte Vertragsstaaten:
**AT BE CH DE FR GB IT LI LU NL SE**

(56) Entgegenhaltungen:
**EP-A- 0 120 506**
**DE-B- 1 134 518**
**FR-A- 1 568 959**
**GB-A- 106 095**
**US-A- 2 402 441**
**US-A- 3 387 783**

(73) Patentinhaber: **Gerking, Lüder, Dr.-Ing.,
Amselstrasse 26, D-1000 Berlin 33(DE)**

(72) Erfinder: **Walz, Alfred, Prof. Dr.-Ing., Am Kurzarm 7,
D-7830 Emmendingen(DE)**

(74) Vertreter: **Hafner, Dieter, Dr.rer.nat., Dipl.-Phys.,
Ostendstrasse 132, D-8500 Nürnberg 30(DE)**

**Beschreibung**

Die Erfindung betrifft ein Verfahren zum Herstellen von Feinstpulver in Durchmessergrößenordnung von etwa 5 bis 30 µm aus Metall-, Metallegierungs- oder Keramik-Schmelzen in einem rotationssymmetrischen, von einem Treibgas durchströmten Laval-Düsensystem, sowie eine zur Durchführung des Verfahrens bestimmte Vorrichtung.

In der DE-PS 22 37 884 und zugehörigen US-Patenten 4 001 357 und 4 060 355 ist eine Optimierungsregel für die geometrische Form einer Laval-Überschall-Düsenanordnung in Strömungsrichtung in Abhängigkeit von den Eigenschaften des Schmelzmateriales unter Schutz gestellt. Als wesentliches Merkmal dieser für die Erzeugung von Fasern bestimmten Optimierungsregel ist hervorzuheben, daß beim Eintritt des primären Schmelzestrahles in den Expansionsbereich, d.h. nach dem Passieren des engsten Querschnittes mit der Machzahl M=l, und nach dem Entstehen des Fadenbüschels, bestehend aus vielen sekundären Schmelzefasern mit µm Durchmesser die Abkühlung mit Erstarrung im Expansionsbereich sehr rasch erfolgen muß. Diese Erstarrung erfolgt jedenfalls schon bevor durch hydrodynamische Instabilität ein Zerfall in Tröpfchen oder Kügelchen stattfindet.

Für die Optimierung einer Überschall-Treibgasvorrichtung zum Erzeugen von Feinstpulver in der Durchmessergrößenordnung von etwa 5 bis 30 µm aus den eingangs genannten Schmelzematerialien muß nach den Verfahrensregeln des US-Patentes 4 534 9l7 statt schneller Abkühlung des Sekundär-Fadenbüschels ein Flüssig-Erhalten der Schmelze durch Wärmezufuhr in diesem Bereich vorgesehen werden.

Als wichtige Bedingung ist das Laminarhalten der Strömung im Treibstrahl zu nennen.

Der Erfindung liegt daher die Aufgabe zugrunde, ein Verfahren und eine Vorrichtung anzugeben, mit dem die erforderliche Wärmezufuhr, sowie das Laminarhalten der Treibströmung sichergestellt wird und hiermit die Bildung von Feinstpulver-Teilchen durch Verhinderung von Tropfenbildung mit größerem Durchmesser sichergestellt wird.

Diese Aufgabe wird durch die kennzeichnenden Merkmale des Anspruches l, bzw. des Anspruches 5, gelöst. Vorteilhafte Weiterbildungen der Erfindung ergeben sich aus den Unteransprüchen.

Durch das Kennzeichen des Anspruches l, nämlich die Separierung des eigentlichen Schmelzvorganges vom Überhitzungsvorgang, der erst unmittelbar vor Beschleunigung des Schmelzestrahles in der Laval-Düse stattfindet, wird eine besonders feine Aufsplittung des Schmelzemonofils erreicht. Der durch die Laval-Düse hindurchtretende Schmelzemonofil wird im Bereich seiner Oberfläche durch auf ihn einwirkende Scherspannungen des Überschallgasflusses innerhalb von Mikrosekunden auf ungefähr l00 m/s beschleunigt. Die dabei auftretenden Kräfte übertreffen die Oberflächenspannung des Schmelzematerial um ungefähr drei Größenordnungen. Dadurch wird vermieden, daß sich relativ große Tröpfchen bilden. Das Schmelzemonofil tritt nun in diesem oberflächenbeschleunigten Zustand in einen Bereich relativ geringen Druckes ein.

Der große Druckunterschied zwischen dem Zentralbereich des Monofils und einer hochbeschleunigten Oberfläche führt nun dazu, daß der Monofil in ein Bündel von sehr dünnen Fasern aufplatzt, die dann aufgrund von Oberflächenspannungserscheinungen, denen dann keine stabilisierenden axialen Scherkräfte mehr entgegenwirken können, in ultrafeine Pulverteilchen zerfallen, deren Durchmesser zumindest eine Größenordnung kleiner sind als der Durchmesser des Ausgangsmonofils.

Es ist einsichtig, daß zur Aufrechterhaltung dieses Prozesses eine sehr feine Temperaturabstufung erforderlich ist, um die Schmelzentemperatur auf so einem Niveau zu halten, daß die dünnen Fäden nach dem vorstehend näher erläuterten Auseinanderfallen des Monofils flüssig bleiben. Dies wird durch die Strahlungsheizung erreicht, die auf die Fäden einwirkt.

Besonders vorteilhaft wird die Überhitzung des Schmelzestrahls durch Heizung eines Treibgaszuführtrichters vorgenommen, der seine Wärmestrahlung auf seine Rotationsachse fokussiert. Vorteilhafterweise ist der Treibgaszuführungstrichter induktiv beheizbar.

Besonders vorteilhaft einwirken kann die Wärmestrahlung auf die austretende Schmelze dann, wenn an dem Schmelztiegel ein konische, einen Ringspalt bildende Öffnung vorgesehen wird, da dann die Schmelze zunächst an einem Ablaufzapfen entlang läuft (also außerhalb des eigentlichen Schmelztiegels, in dem wiederum nur geschmolzen wird) und bereits im Bereich des Ablaufzapfens der Überhitzungsvorgang vorgenommen wird. Hierbei ist besonders vorteilhaft, daß die Schmelze im Bereich des Verschlußzapfens der Wärmestrahlung als dünner Film sehr großflächig ausgesetzt ist. Dieser Überhitzungsvorgang hängt stark von der Dicke des Schmelzeflusses ab, weswegen es vorteilhaft ist, gemäß Anspruch l2 zur gezielten Veränderung der lichten Ringspaltbreite das Verschlußteil axial in der Öffnung verschiebbar zu gestalten.

Die Erfindung ist anhand vorteilhafter Ausführungsbeispiele in den Zeichnungsfiguren näher erläutert. Diese zeigen:

Fig. l einen Querschnitt durch eine Vorrichtung zur Durchführung des erfindungsgemäßen Verfahrens;

Fig. 2 ein abgewandeltes Ausführungsbeispiel einer Laval-Düsenform;

Fig. 3 einen Teilausschnitt einer Vorrichtung analog Fig.l für tiegelloses Schmelzen;

Fig. 4 einen Mittelängsschnitt durch den Schmelztiegel mit ringspaltartiger Öffnung und die Laval-Düsenanordnung.

In Fig. l ist schematisch ein Querschnitt durch eine erfindungsgemäße Vorrichtung dargestellt, mit der bzw. in der das erfindungsgemäße Verfahren ausgeübt werden kann.

In einem Behälter I, der durch eine Trennwand 2 in einen oberen Gasraum 3 und einen unteren Gasraum 4 aufgeteilt ist, ist beispielsweise ein Schmelztiegel 5 angeordnet, mit einer Schmelzeaustrittsöffnung 6. Der Schmelztiegel 5 kann z.B. aus Quarzglas, Sinterkeramik oder Graphit bestehen. Zur Beheizung des Schmelztiegels 5 dient beispielsweise eine Widerstandsheizung 8, die z.B. in eine keramische Masse 7 eingebettet ist. Der Schmelzetiegel 5 nimmt die Schmelze II auf. Für die Schmelze können alle Metalle bzw. Metallegierungen eingesetzt werden, insbesondere Eisen, Kobalt, Nickel, Chrom, Aluminium oder deren Legierungen. Insbesondere ist es auch möglich, z.B. Eisenlegierungen mit Zusätzen von Kristallisationsinhibitoren, wie Chrom-Titan oder Bor als Metallpulver zu erhalten. Auch Silber, Platin, Iridium oder Legierungen davon, eignen sich für den Einsatz des erfindungsgemäßen Verfahrens.

In der Trennwand 2 ist ein Formteil 9 eingepaßt mit einer Durchtrittsöffnung I0.

Der obere Gasraum 3 weist mindestens eine Treibgaszufuhr I2 auf. Besonders zweckmäßig ist es, über den Umfang des Behälters I verteilt mehrere Treibgaszufuhren I2 vorzusehen.Der untere Gasraum 4 ist mit einer Gasabfuhr I3 versehen. Der untere Gasraum 4 ist ferner mit einer Schleuse oder dergl. in einer Pulverabführleitung I4 ausgestattet.

Insbesondere der obere Teil des Behälters I kann mit einer thermischen Isolierung I5 ummantelt sein.

Erfindungsgemäß ist im oberen Gasraum 3 ein Treibgaszufuhrtrichter I7 angeordnet, der von einer induktiven Heizung 26 umgeben ist. Der Treibgaszufuhrtrichter I7 weist eine Stelle mit engsten Querschnitt 2I auf. Die Treibgaszufuhrleitung I2 kann mit einem (nicht dargestellten) Ventil zur Einstellung des Gasdruckes im oberen Gasraum versehen sein. Desgleichen kann die untere Gasabführleitung I3 mit einer (nicht dargestellten) Förderpumpe zur Einstellung und Aufrechterhaltung des Gasdruckes im unteren Gasraum 4 versehen sein.

Als Treibgase können alle Gase eingesetzt werden, die nicht mit der Metallschmelze reagieren. Vorzugsweise werden hochreine Inertgase, wie Helium oder Argon eingesetzt. Bei Metallen, die keine Hydride bilden, kann auch Wasserstoff eingesetzt werden. Bei Metallen, die keine Nitride bilden, kann Stickstoff eingesetzt werden. Auch Verbrennungsabgase wie Kohlenmonoxyd können unter gewissen Umständen vorteilhaft sein.

Im oberen Gasraum 3 herrscht beispielsweise ein Druck $p_1$ von 5 atü, während im unteren Gasraum 4 ein Druck $p_2$ von etwa I atü aufrechterhalten wird. Das Verhältnis von $p_2/p_1$ soll kleiner als 0,5 sein vorzugsweise 0,2 betragen.

Der Treibgaszuführtrichter I7 besteht aus einem elektrische-induktiv heizbaren Metall, z.B. Molybdän oder auch aus Edelmetall z.B. Platin. Seine Wärmestrahlung wird auf seiner Rotationsachse, auf die sich dort befindlichen Schmelze, fokussiert. Der Treibgaszuführtrichter I7 weist eine Laval-Düsenform I8 an seinem unteren Ende auf, die den Schmelzestrahl I6 oder auch Teile des konisch geformten Schmelztiegels 5 koaxial umgibt. Dabei wird die Wärmeenergie dieser induktiv-elektrisch beheizten rotationssymmetrischen Konstruktion, wie erwähnt, auf den in deren Achse verlaufenden Schmelzestrahl I6 fokusiert.

Das Treibgas I9 wird durch den Grenzschichtkontakt an der Innenseite 20 des Treibgaszuführtrichters I7 in erwünschter Weise ebenfalls erhitzt, wodurch die den Schmelzestrahl I6 beschleunigende Reibungskräfte in erwünschter Weise vergrößert werden. Da der Treibgasstrom I9 in einem sich in Strömungsrichtung stetig verengenden Querschnitt bewegt, erfährt er eine so starke Beschleunigung in Richtung auf den engsten Querschnitt 2I der Laval-Düse I8 (wo Schallgeschwindigkeit erreicht und anschließend überschritten wird), daß er durch Grenzschichtoberflächenreibung mit Geschwindigkeiten von über I00m/sec bewegt wird.

Der Schlupf gegenüber dem Treibgasstrahl I9 beträgt dann an dieser Stelle ca. 200 m/sec. Durch diese hohen Beschleunigungskräfte an der Oberfläche des Primär-Schmelzestrahles I6 wird ein vorzeitiger Zerfall dieses Schmelzstrahles in die Sekundär-Schmelzfäden 22 verhindert. Erst beim Eintreten des Primär-Schmelzestrahles I6 in das Unterdruck-Überschallgebiet soll das erwünschte Aufplatzen in ein Büschel feinster Sekundär-Schmelzefäden 22 erfolgen. Erst nach diesem Ereignis erfolgt dann -durch die Strahlungsheizung reguliert - ein Zerfall in Kügelchen 23 von der μm Feinstgrößenordnung, die auch die Sekundärschmelzefäden 22 durch hydrodynamischen Instabilitätszerfall aufweisen.

Das im Schmelzetiegel 5 geschmolzene Metall tritt durch die Schmelzeaustrittsöffnung 6 als Monofil aus, der durch die Grenzschichtreibungskräfte aufgrund der Oberflächenbeschleunigung zunächst zusammengehalten wird und dann erst nach dem Eintritt in den Bereich geringeren Druckes in Fasern 22 aufgeplatzt, die dann in Kügelchen 23 zerfallen.

Die Abkühlung erfolgt zum Teil aufgrund der adiabatischen Abkühlung des Treibgases beim Hindurchtreten durch die Öffnung I0. Bei hohen Schmelzetemperaturen und sehr kleinen Kugeldurchmessern erfolgt die Abkühlung im wesentlichen durch Strahlung gemäß dem $T^4$-Gesetz.

Das sich bildende Metallpulver 23 wird durch die Ablaßöffnung I4 unter Aufrechterhaltung des Gasdruckes im unteren Gasraum 4 periodisch ausgeschleußt. Die Zuführung von Metall in den Schmelzetiegel 5 kann z.B. durch Nachschieben eines Metallbarrens 24 durch eine obere Tiegelöffnung 25 erfolgen, wobei der Barren im Kontakt mit der Schmelze II abschmilzt.

Das Formteil 9, das die Gasdurchtrittsöffnung I0 bildet, wird vorzugsweise aus wärmebeständigen Material, z.B. Keramik oder Quarzglas gebildet.

Bei dem Prozeß der Verhinderung sowohl des vorzeitigen Zerfalles des Schmelzestrahles I6 in grobes Pulver (mit der Durchmessergrößenordnung des Primärstrahles I6), als auch beim Aufplatzen des Sekundär-Schmelzestrahles 22, bestehend aus vielen parallelen Sekundär-Schmelzefäden in das Feinst pulver 23, spielen die Strukturviskosität bei raschen Querschnittsänderungen eines Einzelfadens eine günstige Rolle. Eine starke Beschleunigung auf kurzer Strecke in axialer Richtung bedingt zwangsläufig auch rasche Querschnittsänderungen und damit die oben erwähnte Strukturviskosität, die eine Stabilisierung des Einzelfadens bewirkt, so daß die Feinstschmelzefäden 22 nach ihrer Entstehung für kurze Zeit erhalten bleiben, bevor die hydrodynamische Instabilität im Expansionsbereich der Laval-Düse 18 entstehen kann.

Die Erhitzung des Treibgases beim Durchströmen des heißen Treibgaszufuhrtrichters 17 ist besonders vorteilhaft, da die molekulare Viskosität des Treibgases (wie bei jedem gasförmigen Medium) mit steigender Temperatur stark zunimmt.

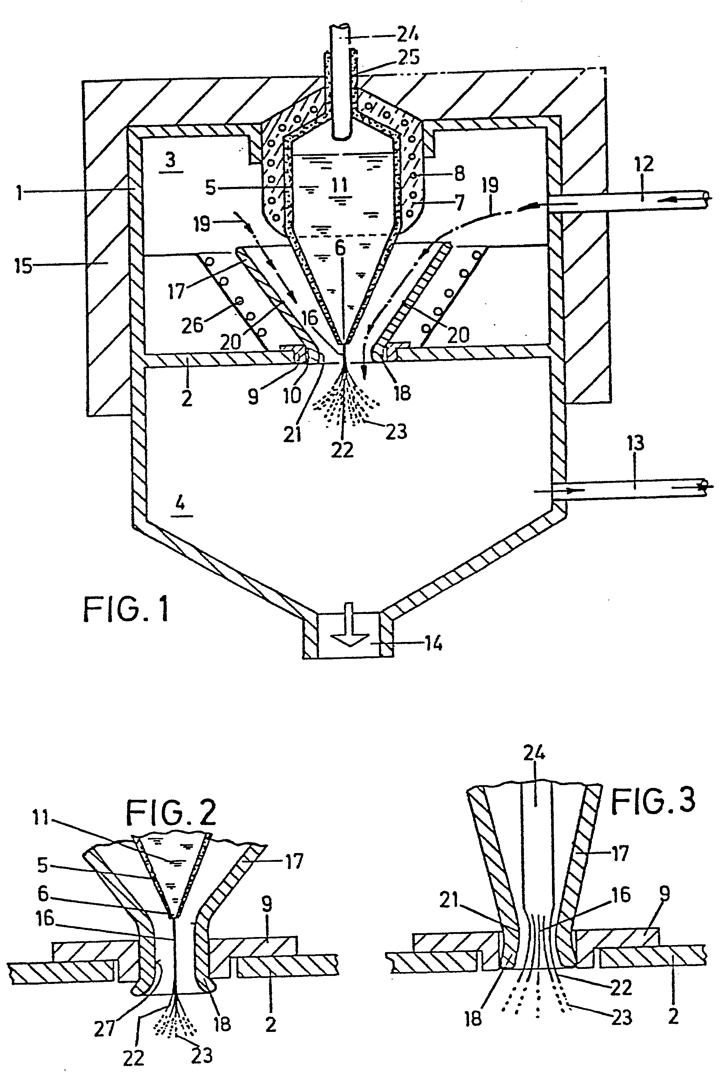

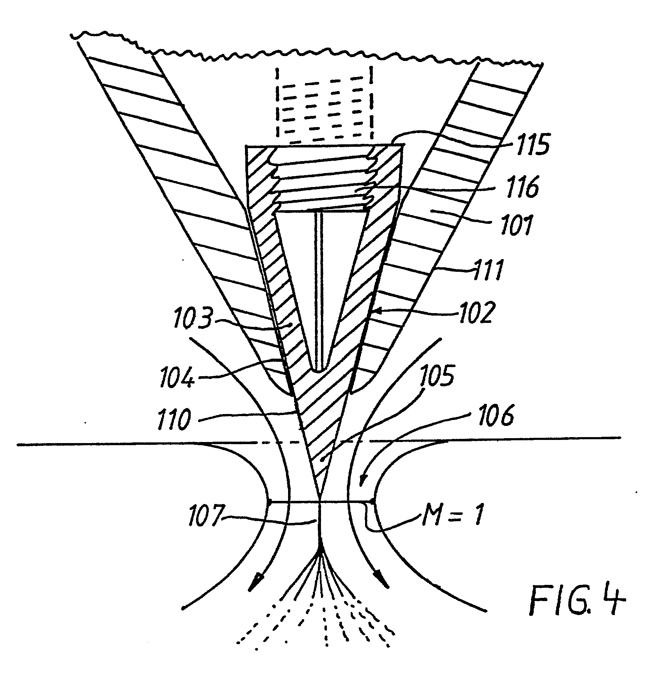

In Fig. 2 ist ein abgewandeltes Ausführungsbeispiel dargestellt, bei dem der Treibgaszuführtrichter 17 einen Bereich 27 mit konstantem Querschnitt aufweist, ehe er in die Laval-Düsenform 18 übergeht. Dadurch wird erreicht, daß auf die Schmelzefäden nach dem Austritt aus dem Schmelzetiegel 5 die Grenzschichtreibung als Beschleunigungskraft über eine längere Strecke erfolgt.

Bei dem in Fig. 3 dargestellten Ausführungsbeispiel wird ein tiegelloses Schmelzen verwendet, wobei mit (nicht dargestellten) Zufuhrmitteln ein Metallbarren 24 bis unmittelbar zum Eingang der Laval-Düsenform 18 geführt wird. Durch die induktive Heizung schmilzt der Metallbarren 24 und bildet einen Schmelzestrahl 16. Die Vorgänge der Faser- und späteren Tröpfchen- oder Kügelchenbildung entsprechen den oben beschriebenen.

Im Boden 101 des Schmelzetiegels gemäß dem Ausführungsbeispiel nach Fig. 4 befindet sich eine konische Öffnung 102, in die ein gleichwinklig konisches, d. h. rotationssymmetrisches, in eine konische Spitze auslaufendes Verschlußteil 103 axial eingeschoben wird. Die konische Öffnung 102 ist geschlossen, wenn das Verschlußteil 103 an der konischen Fläche der Öffnung anliegt. Bei vertikaler Verschiebung des Verschlußteils 103 nach oben entsteht eine ringspaltförmige Öffnung 104, durch die die Schmelze längs der Oberfläche des Verschlußteils 103 zur kegeligen Spitze 105 des Verschlußteils 103 hinfließen kann. Ragt die Spitze 105 dieses Verschlußteils 103 während des Schmelzeabfließvorganges rotationssymmetrisch axial in den Einströmungsbereich einer Saugdüse 106 hinein, z. B. einer Laval-Düse, so wird das Strömungsmaterial im Bereich der konischen Spitze 105 des Verschlußteils 103 kontinuierlich in Form eines axial symmetrischen Schmelzemonofils 107 abgesaugt. Die Schmelzemenge und damit die Dicke der Schmelze an der Außenwandung 110 des Verschlußteils 103 läßt sich durch axiale Verschiebung des Verschlußteils 103 in der Öffnung 102 variieren.

Weiterhin ist Fig. 4 zu entnehmen, daß die Außenwandung 111 des Schmelzetiegels 101 konisch und weitgehend gleichmäßig in die Außenwandung 110 des Verschlußteils 103 übergeht. Von wesentlicher Bedeutung ist ferner, daß die Außenwandung 110 des Verschlußteils im Strahlungs- oder Wirkungsbereich der Strahlungsheizung und im Innenbereich der Laval-Düse angeordnet ist derart, daß die Spitze 105 des Verschlußteils 103 im Bereich des engsten Laval-Düsenquerschnittes sitzt.

Zur einfachen Verstellung der Axiallage des Verschlußteils 103 gegenüber der Öffnung 102 kann das Verschlußteil 103 an seinem tiegelinneren Ende 115 ein Gewinde 116 aufweisen, durch welches es axial in die Unterseite des Tiegels 101 einschraubbar ist.

Die Erfindung ist nicht auf die dargestellten Merkmale und Maßnahmen beschränkt. Sie umfaßt auch alle fachmännischen Weiterbildungen, Abwandlungen und Vereinfachungen sowie Teil- und Unterkombinationen der beschriebenen und/oder dargestellten Merkmale und Maßnahmen.

**Patentansprüche**

1. Verfahren zum Herstellen von Feinstpulver in Kugelform mit einem Durchmesser von kleiner als und bis zu 30 µm aus Metall-, Metallegierungs- oder Keramikschmelzen in einer i.w. rotationssymmetrischen, von einem Treibgas laminar durchströmten Laval-Düsenanordnung, wobei das Schmelzematerial zunächst in einem Schmelztiegel geschmolzen wird, diesen durch eine untere Austrittsöffnung verläßt und sodann in die Laval-Düsenanordnung eintritt, dadurch gekennzeichnet, daß nach dem Austreten eines durch das geschmolzene Schmelzematerial gebildeten Schmelzestrahls aus der Schmelztiegel-Austrittsöffnung und während des Hindurchtretens dieses Schmelzestrahls durch eine Laval-Düse der Laval-Düsenanordnung eine geregelte Überhitzung des Schmelzestrahls durch Strahlungsheizung erfolgt.

2. Verfahren nach Anspruch 1, dadurch gekennzeichnet, daß die Überhitzung des Schmelzestrahls durch Heizung einer i.w. rotationssymmetrischen Treibgaszuführvorrichtung der Laval-Düsenanordnung erfolgt, deren Wärmestrahlung im wesentlichen auf die Rotationsachse der Treibgaszuführvorrichtung fokussiert wird.

3. Verfahren nach Anspruch 2, dadurch gekennzeichnet, daß die Treibgaszuführvorrichtung induktiv beheizt wird.

4. Vorrichtung zum Herstellen von Feinstpulver in Kugelform mit einem Durchmesser von unterhalb und bis zu 30 µm aus Metall-, Metallegierungs- oder Keramikschmelzen, mit einem durch eine Trennwand (2) in einen oberen Gasraum (3) und einen unteren Gasraum (4) aufgeteilten Behälter (1), einem in diesem Behälter (1) angeordneten Schmelztiegel (5), wenigstens einer Treibgaszufuhr (12) sowie einer im wesentlichen rotationssymmetrischen, von dem Treibgas laminar durchströmten Laval-Düsenanordnung, wobei der Schmelztiegel eine untere Austrittsöffnung (6) aufweist, welche sich innerhalb der Laval-Düsenanordnung befindet, insbesondere zur Durchführung des Verfahrens nach einem der Ansprüche 1–4, dadurch gekennzeichnet, daß im Bereich einer im wesentlichen rotationssymmetrischen Treibgaszuführvorrichtung der Laval-Düsenanordnung mit Laval-Düse (18) eine Induktionsheizvorrichtung (26) angeordnet ist, um den aus geschmolzenem Schmelzematerial bestehenden Schmelzestrahl nach seinem Austreten aus der unteren Austrittsöffnung (6) des Schmelztiegels (5) und während seines Hindurchtretens durch die Laval-Düse (18) mittels von der Treibgaszuführvorrichtung abgegebener Wärmestrahlung in geregelter Weise zu überhitzen.

5. Vorrichtung nach Anspruch 4, dadurch gekennzeichnet, daß die Treibgaszuführvorrichtung im wesentlichen aus einem konischen Treibgaszuführtrichter (17) mit einem in Strömungsrichtung sich stark verjüngenden Querschnitt und mit einem engsten Querschnitt (21) für die Erzielung des Laval-Düseneffektes im Bereich seines unteren Endes, d.h. im Bereich der Laval-Düse (18), besteht.

6. Vorrichtung nach Anspruch 5, dadurch gekennzeichnet, daß der Treibgaszuführtrichter (17) zumindest an seinem düsenseitigen Ende aus einem elektrisch-induktiv beheizbaren Material besteht.

7. Vorrichtung nach Anspruch 6, dadurch gekennzeichnet, daß das Material des Treibgaszuführtrichters (17) ein Metall wie Molybdän oder ein Edelmetall, insbesondere Platin, ist.

8. Vorrichtung nach einem der Ansprüche 5–7, dadurch gekennzeichnet, daß Mittel zur Bildung eines Überdruckes (P1) im oberen Gasraum (3) und zur Bildung eines Unterdruckes (P2) im unteren Gasraum (4) vorgesehen sind und daß die Trennwand (2) eine Durchtrittsöffnung (10) aufweist, in der ein Formteil (9) eingepaßt ist, das den Treibgaszuführtrichter (17) mit der Laval-Düse (18) aufnimmt.

9. Vorrichtung nach einem der Ansprüche 4–8, gekennzeichnet durch einen beheizbaren Schmelztiegel (5).

10. Vorrichtung nach einem der Ansprüche 4–8, dadurch gekennzeichnet, daß anstelle eines Schmelztiegels eine Zuführvorrichtung für einen Schmelzmaterialbarren (24) in den Treibgaszuführtrichter (17) für tiegelloses Schmelzen und anschließendes Überhitzen des resultierenden Schmelzstrahls (16) vorgesehen ist.

11. Vorrichtung nach einem der Ansprüche 4–9, dadurch gekennzeichnet, daß der Schmelztiegel (01) an seinem laval-düsenseitigen Ende mit einer im geöffneten Zustand einen Ringspalt bildenden, konischen Öffnung (104) versehen ist, die von einem gleichwinklig konischen, in einem Ablaufzapfen endenden Verschlußteil (103) derart durchsetzt ist, daß die durch den Ringspalt auslaufende Schmelze an der Außenwandung des Verschlußteiles (103) entlangfließt und von der Zapfenspitze (105) als monofiler Schmelzstrahl (107) abgezogen wird.

12. Vorrichtung nach Anspruch 11, dadurch gekennzeichnet, daß zur gezielten Veränderung der lichten Ringspaltbreite das Verschlußteil (103) axial in der Öffnung verschiebbar ist.

13. Vorrichtung nach einem der Ansprüche 11 oder 12, dadurch gekennzeichnet, daß die Außenwand (111) des Schmelztiegels (101) konisch und weitgehend gleichmäßig in die Außenwandung (101) des Verschlußteils (103) übergeht.

14. Vorrichtung nach einem der Ansprüche 10–13, dadurch gekennzeichnet, daß die Außenwandung (110) des Verschlußteils (103) im Strahlungs- oder Wirkungsbereich der Strahlungsheizung und im Innenbereich der Laval-Düse (106) angeordnet ist.

15. Vorrichtung nach einem der Ansprüche 10–14, dadurch gekennzeichnet, daß das Verschlußteil (103) an seinem tiegelinneren Ende (115) ein Gewinde (116) aufweist, durch das es axial in die Unterseite des Schmelztiegels (101) einschraubbar ist.

16. Vorrichtung nach einem der Ansprüche 10–15, dadurch gekennzeichnet, daß der Schmelztiegel (101), die Laval-Düse (106) und das Verschlußteil (103) in axialer Richtung gegenseitig justierbar sind.

## Claims

1. A method of producing ultra-fine powder in spherical form with a diameter of less than and up to 30 microns from molten metal, metal alloy or ceramic materials, substantially rotationally symmetrical Laval nozzle arrangement which is traversed by a laminar flow of propellant gas, the molten material being initially fused in a smelting crucible, which it then leaves through a bottom outlet orifice to enter the Laval nozzle arrangement, characterised in that after the emergence from the outlet orifice of the smelting crucible of the stream of molten material and while this stream is passing through a Laval nozzle in the arrangement of Laval nozzles, there is a regulated super-heating of the molten stream by radiant heating.

2. A method according to Claim 1, characterised in that super-heating of the molten stream takes place by heating of a substantially rotationally symmetrical propellant gas feed means for the Laval nozzle arrangement, from which the radiated heat is focussed substantially on the axis of rotation of the propellant gas feed means.

3. A method according to Claim 2, characterised in that the propellant gas feed means is inductively heated.

4. An apparatus for producing ultra-fine powder in spherical form with a diameter of less than and up to 30 microns from molten metal, metal alloy or ceramic materials, with a container (1) sub-divided by a partition (2) into an upper gas space (3) and a lower gas space (4), a smelting crucible (5) disposed in this container (1), at least one propellant gas feed (12) and a substantially rotationally symmetrical Laval nozzle arrangement traversed by a laminar flow of propellant gas, the smelting crucible comprising a bottom outlet orifice (6) which is disposed within the Laval nozzle arrangement, in particular for carrying out the method according to one of Claims 1 to 3, characterised in that in the region of a substantially rotationally symmetrical propellant gas feed device for the Laval nozzle arrangement with Laval nozzle (18) there is an induction heating means (26) for the controlled super-heating of the stream of molten material after it has emerged from the bottom outlet orifice (6) of the smelting crucible (5) and while it is passing through the Laval nozzle (18), utilising the radiated heat given off by the propellant gas feed means.

5. An apparatus according to Claim 4, characterised in that the propellant gas feed means consists essentially of a conical propellant gas feed funnel (17) having a cross-section which tapers sharply in the direction of flow and with a narrowest cross-section (21) to achieve the Laval nozzle effect in the region of its bottom end, i.e. in the region of the Laval nozzle (18).

6. An apparatus according to Claim 5, characterised in that the propellant gas feed funnel (17), at least at its end which is towards the nozzle, consists of an electrically inductively heatable material.

7. An apparatus according to Claim 6, characterised in that the material of the propellant gas feed funnel (17) is a metal such as molybdenum or a rare metal, particularly platinum.

8. An apparatus according to one of Claims 5 to 7, characterised in that means are provided for forming an above-atmospheric pressure (P1) in the upper gas space (3) and for forming a negative pressure (P2) in the lower gas space (4) and in that the partition (2) comprises an aperture (10) into which is fitted a moulding (9) which accommodates the propellant gas feed funnel (17) with the Laval nozzle (18).

9. An apparatus according to one of Claims 4 to 8, characterised by a heatable smelting crucible (5).

10. An apparatus according to one of Claims 4 to 8, characterised in that instead of a smelting crucible, a device is provided to feed a bar of smelting material (24) into the propellant gas feed funnel (17) for non-crucible smelting and subsequent superheating of the resultant stream (16) of molten material.

11. An apparatus according to one of Claims 4 to 9, characterised in that the smelting crucible (101) is provided at its end which is towards the Laval nozzle with a conical aperture (104) which in the open condition forms an annular gap which is so traversed by an equi-angularly conical closure member (103) which ends in a drain tapping, in such a way that the molten material emerging through the annular gap flows along the outside walls fo the closure member (103) and is drawn off from the tapping pint (105) as a molten monofilament stream (107).

12. An apparatus according to Claim 11, characterised in that for the controlled alteration of the inside width of the annular gap, the closure member (103) is axially displaceable in the aperture.

13. An apparatus according to one of Claims 11 or 12, characterised int hat the outside wall (111) of the smelting crucible (101) is conical and merges substantially evenly into the outside walls (101) of the closure member (103).

14. An apparatus according to one of Claims 10 to 13, characterised in that the outside walls (110) of the closure member (103) are disposed in the radiation zone or the effective zone of the radiant heating and in the inner zone of the Laval nozzle (106).

15. An apparatus according to one of Claims 10 to 14, characterised in that the closure member (103) has at its end (115) which is inside the crucible a screwthread (116) by which it can be screwed axially into the bottom of the smelting crucible (101).

16. An apparatus according to one of Claims 10 to 15, characterised in that the smelting crucible (101), the Laval nozzle (106) and the closure member (103) can be reciprocally adjusted in an axial direction.

## Revendications

1. Procédé de fabrication de poudre très fine sous forme sphérique, de diamètre inférieur ou égal à 30 μm, à partir de métal, d'alliage métallique ou de céramique en fusion, dans un moyen à buse de Laval présentant essentiellement une symétrie de révolution et traversé de façon laminaire par un gaz d'entraînement, la matière fusible étant d'abord fondue dans un creuset, quittant celui-ci par une ouverture de sortie inférieure, puis entrant dans le moyen à buse de Laval, caractérisé en ce que, après la sortie d'un jet de matière en fusion formé par la matière fusible fondue, par l'ouverture de sortie du creuset, et pendant le passage de ce jet de matière en fusion par une buse de Laval du moyen à buse de Laval, on assure une surchauffe contrôleée du jet de matière en fusion par chauffage par rayonnement.

2. Procédé selon la revendication 1, caractérisé en ce que la surchauffe du jet de matière en fusion est assurée par chauffage d'un moyen d'admission du gaz d'entraînement, présentant essentiellement une symétrie de révolution, du moyen à buse de Laval, le rayonnement thermique dudit moyen d'admission étant sensiblement concentré sur l'axe de révolultion de celui-ci.

3. Procédé selon la revendication 2, caractérisé en ce que l'on chauffe par induction le moyen d'admission du gaz d'entraînement.

4. Dispositif pour fabriquer de la poudre très fine sous forme sphérique, de diamètre inférieur ou égal à 30 μm, à partir de métal, d'alliage métallique ou de céramique en fusion, comportant un réservoir (1) qui est divisé par une cloison (2) en une enceinte à gaz supérieure (3) et en une enceinte à gaz inférieure (4), un creuset (5) disposé dans ce réservoir (1), au moins une entrée (12) de gaz d'entraînement ainsi qu'un moyen à buse de Laval qui présente sensiblement une symétrie de révolution et qui est traversé de façon laminaire par le gaz d'entraînement, le creuset comportant une ouverture de sortie inférieure (6) qui se situe à l'intérieur du moyen à buse de Laval, en particulier pour la mise en œuvre du procédé selon l'une des revendications 1 à 3, caractérisé en ce que, au voisinage d'un moyen d'admission du gaz d'entraînement, présentant sensiblement une symétrie de révolution, du moyen à buse de Laval, muni d'une buse de Laval (18), il comporte un moyen de chauffage par induction (26) pour, après la sortie du jet de matière en fusion, formé de matière fusible fondue, par l'ouverture de sortie inférieure (6) du creuset (5) et pendant le passage dudit jet de matière en fusion dans la buse de Laval (18), surchauffer ce jet de manière contrôlée à l'aide du rayonnement thermique émis par le moyen d'admission du gaz d'entraînement.

5. Dispositif selon la revendication 4, caractérisé en ce que le moyen d'admission du gaz d'entraînement est en substance constitué par un guide conique d'admission (17) du gaz d'entraînement, présentant une section qui diminue fortement dans le sens du courant et un col (21) pour assurer l'effet du buse de Laval dans la zone de son extrémité inférieure, c'est-à-dire dans la zone de la buse de Laval (18).

6. Dispositif selon la revendication 5, caractérisé en ce que, au moins à son extrémité située du côté de la buse, le guide d'admission (17) du gaz d'entraînement est formé d'une matière capable d'être chauffée électriquement par induction.

7. Dispositif selon la revendication 6, caractérisé en ce que la matière formant le guide d'admission (17) du gaz d'entraînement est un métal, tel que le molybdène ou un métal précieux, en particulier le platine.

8. Dispositif selon l'une des revendications 5 à 7, caractérisé en ce qu'il est prévu des moyens pour engendrer une surpression (P1) dans l'enceinte à gaz supérieure (3) et pour engendrer une dépression (P2) dans l'enceinte à gaz inférieure (4) et en ce que la cloison (2) comporte une ouverture de passage (10) dans laquelle est emboîté un élément de forme (9) qui reçoit le guide d'admission (17) du gaz d'entraînement avec la buse de Laval (18).

9. Dispositif selon l'une des revendications 4 à 8, caractérisé par un creuset (5) qui est agencé de manière à pouvoir être chauffé.

10. Dispositif selon l'une des revendications 4 à 8, caractérisé en ce que, au lieu d'un creuset, il est prévu un moyen pour introduire une barre (24) de matière fusible dans le guide d'admission (17) du gaz d'entraînement afin de réaliser la fusion sans creuset et d'assurer ensuite la surchauffe du jet (16) de matière en fusion obtenu.

11. Dispositif selon l'une des revendications 4 à 9, caractérisé en ce que, à son extrémité située du côté de la buse de Laval, le creuset (101) est muni d'une ouverture conique (104) qui forme une fente annulaire lorsqu'elle est ouverte et qui est traversée par une pièce de fermeture (103), de conicité identique et se terminant en un pointeau d'écoulement, de telle façon que la matière en fusion sortant par la fente annulaire s'écoule le long de la paroi extérieure de la pièce de fermeture (103) et soit extraite de la pointe (105) du pointeau sous la forme d'un jet monofilamentaire (107) de matière en fusion.

12. Dispositif selon la revendication 11, caractérisé en ce que la pièce de fermeture (103) est déplaçable axialement dans l'ouverture pour modifier de la façon voulue la largeur libre de la fente annulaire.

13. Dispositif selon l'une des revendications 11 et 12, caractérisé en ce que la paroi extérieure (111) du creuset (101) est prolongée de façon conique et dans une large mesure de manière uniforme par la paroi extérieure (110) de la pièce de fermeture (103).

14. Dispositif selon l'une des revendications 10 à 13, caractérisé en ce que la paroi extérieure (110) de la pièce de fermeture (103) est disposée dans la zone de rayonnement ou d'action du chauffage par rayonnement et dans la lumière de la buse de Laval (106).

15. Dispositif selon l'une des revendications 10 à 14, caractérisé en ce que, à son extrémité (115) située à l'intérieur du creuset, la pièce de fermeture (103) comprend un filetage (116) par lequel elle peut être vissée axialement dans la face inférieure du creuset (101).

16. Dispositif selon l'une des revendications 10 à 15, caractérisé en ce que le creuset (101, la buse de laval (106) et la pièce de fermeture (103) sont mutuellement réglables en position axiale.

EP 0 220 418 B1

FIG.1

FIG.2

FIG.3

FIG. 4